(19) Europäisches Patentamt
European Patent Office
Office européen des brevets

(11) **EP 2 684 838 A2**

## (12) EUROPEAN PATENT APPLICATION

(43) Date of publication:
**15.01.2014 Bulletin 2014/03**

(51) Int Cl.:
***B82B 3/00*** *(2006.01)* ***B82Y 40/00*** *(2011.01)*
***H01F 1/00*** *(2006.01)*

(21) Application number: **12460070.1**

(22) Date of filing: **28.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2012 PL 40068912**

(71) Applicant: **Instytut Elektrotechniki**
**04-703 Warzawa (PL)**

(72) Inventors:
• **Wojciech, Lipiec**
**54-129 Wroclaw (PL)**

• **Boleslaw, Mazurek**
**55-002 Kanieniec Wroclawski (PL)**
• **Grzegorz, Pasciak**
**52-408 Wroclaw (PL)**
• **Bronislaw, Szubzda**
**50-211 Wroclaw (PL)**
• **Orlowski Edward**
**50-305 Wroclaw (PL)**

(74) Representative: **Kozlowska, Regina**
**ul. Pomorska 4/16**
**50-218 Wroclaw (PL)**

(54) **Method of fabricating magnetic nanowires**

(57) The subject of the invention is a method of producing magnetic nanowires to be used particularly in the production of computer memory media.

The method consists in the fact that a ferromagnetic raw material which is ground to nanometric particles is placed near a source of the magnetic field and subjected to the influence of an inhomogeneous magnetic field which produces magnetostatic force of the following value: $F = m_x gradB_x + m_y gradB_y + m_z gradB_z$, where: $m_x$, $m_y$, $m_z$ constitute component values of the magnetic moment vector of nanometric particles, whereas $B_x$, $B_y$, $B_z$, are component values of the magnetic flux density vector and then under the influence of this force, on the substrate made of a non-magnetic material, nanometric particles are concentrated in the places of the greatest flux density gradients, thus forming islands which grow in an anisotropic way along the lines of the magnetic field force and produce nanowires.

EP 2 684 838 A2

**Description**

The subject of the invention is a method of fabricating magnetic nanowires to be used particularly in the production of computer memory media. Magnetic nanowires (nanofibres) constitute at present the subject of intensive materials science research with regard to their potential possibilities of application in modern magneto-electronic devices, biomedicine, biosensors, in the processes of surface reactions, catalysis, activation of particles, etc. Their special significance consists in their role in the development of another generation of logic systems and computer memories of an ultrahigh capacity.

Magnetic nanowire is a product of an elongated shape for which at least one dimension is smaller than 100 nm and it is made of a ferromagnetic material.

A well known method of producing of nanowires consists in electrodeposition of the nanowire raw material on the surface of nanoporous membrane. The membrane is made of aluminium oxide and fulfils the role of the matrix. The membrane pores are filled with raw material by diffusion and afterwards the membrane is dissolved in an appropriate solvent. In some cases, the product is subjected to a heat treatment in order to achieve its desired structure.

Method of manufacturing of ZnO nanomaterial showing magnetic properties in room temperature known from patent description CN 101645341 consists in producing of ZnO nanomaterial by known chemical or physical methods in the form of nanoparticles, nanowires, nanopipes, quantum dots etc. which is further sintered in the air or another gas, but the sintering process is carried out in the presence of a strong magnetic field. It was noticed that a magnetic field present in the heat treatment process significantly improves magnetic properties of the produced nanomaterials examined in room temperature.

Method of manufacturing magnetic nanowires that is known from the article by Shihui Ge, et al.: Approach to fabricating Co nanowire arrays with perpendicular anisotropy: Application of a magnetic field during deposition, J. Appl. Phys., (2001), vol. 90 p. 509, consists in electrodeposition of Co cobalt on the surface of nanoporous membrane, where the electrolysis is conducted in the presence of a magnetic field which generates texture in nanowires material. The direction of the texture depends on the orientation of the applied field.

Method of manufacturing magnetic nanowires that is known from the article by Hao Zhu, et al.: Fabrication and magnetic properties of $Co_{67}$ $Ni_{33}$ alloy nanowire array, Scripta Materialia, (2001) vol. 44, Iss. 8-9, pp. 2291-2295, consists in electrodeposition of cobalt Co and nickel Ni on the nanoporous membrane surface, where the electrolysis is conducted in the presence of a magnetic field which generates texture in nanowires material. The direction of the texture depends on the orientation of the applied field.

The method of manufacturing silicon nanowires that is known from the international patent application No WO2011027184, consists in electrodeposition of silicon on the surface of nanoporous membrane and then the vacuum treatment is applied.

In the process of fabricating magnetic nanowires it is also possible to use magnetron sputtering combined with lithographic technique. In this case, nanowires have the shape of narrow, long, thin layers oriented parallel to the substrate.

In other technologies carbon nanowires are applied which are filled with the nanowire raw material in the process of arc discharge or with the use of capillary action when the raw material is melted.

The method of fabricating nanowires known from the international patent application No WO2011028054, consists in placing a thin porous layer of metal on the surface of nanowire raw material and subjecting it to etching in an appropriate solution. Ions of the etched material, diffusing, fill pores of the thin metallic layer producing prolonged structures in the form of nanowires.

From the international patent application No WO2011027184, a known method of fabricating nanowires consists in electrodeposition of the nanowire raw material on the nanoporous membrane surface. The membrane fulfils the role of the matrix. Pores of the membrane, as a result of diffusion, are filled with the deposited raw material producing nanowires.

The method of fabricating nanowires consisting in electro-spark melting of the nanowire raw material is know from the Moldavian patent description No MD261. In this process, an electrode is equipped with a matrix in which a melted raw material is scattered in the form of prolonged structures - nanowires.

The aforementioned methods of fabricating magnetic nanowires are charaterised by a great complexity which is mainly connected with a necessity of using a nanoporous membrane or other elements which fulfill the role of the matrix shaping nanowires. The produced nanowires must be fixed to the substrate and therefore, additional technological operations are necessary.

According to the concept of the invention, the essence of the method consists in the fact that a ferromagnetic raw material which is ground to nanometric particles is placed near a magnetic field source and subjected to the effect of the inhomogeneous magnetic field which produces magnetostatic force of the value as follows:

$$F = m_x \, gradB_x + m_y \, gradB_y + m_z \, gradB_z \,,$$

where: $m_x$, $m_y$, $m_z$, constitute component values of the magnetic moment vector of nanometric particles, whereas $B_x$, $B_y$, $B_z$, are component values of the magnetic flux density vector. Next, under the influence of this force, on the substrate made of a non-magnetic material, nanometric particles are concentrated in the places of the greatest flux density gradients, thus forming islands which grow in an anisotropic way along the lines of the magnetostatic force and thus nanowires are produced.

Favourably, a ferromagnetic raw material is sputtered by means of a magnetron sputtering technique and sputtered nanometric particles are deposited on the substrate in the presence of an inhomogeneous magnetic field.

Favourably, a ferromagnetic raw material is deposited by means of a vacuum evaporation technique and the evaporated nanometric particles are deposited on the substrate in the presence of the inhomogeneous magnetic field.

Favourably, the ferromagnetic powder containing nanometric particles is moulded on the substrate in the form of nanowires in the presence of the inhomogeneous magnetic field and is fixed in the temperature above 300 °C for at least one minute.

Favourably, ferrofluide containing nanometric particles is moulded on the substrate in the form of nanowires in the presence of an inhomogeneous magnetic field and is fixed in the temperature above 300 °C for at least one minute.

It is also favourable when nanometric particles are made of ferrite and the produced nanowires are fixed in the air at the temperature above 500 °C for at least one minute.

The most favourable is the application of nanometric particles of diameters smaller than 100 nm.

The method of fabricating nanowires according to our invention enables their production by means of simple and popular technological processes along with the possibility of orienting nanowires and their fixing to the substrate already during the process of fabrication. It is not necessary to use expensive matrixes which mould nanowires or additional technological operations aimed to make the nanowires free from these matrixes on completion of the fabrication process.

The subject of the invention is further explained on the examples of realisations.

Example I

The method of fabricating magnetic nanowires consists in the fact that a ferromagnetic raw material which is ground to nanometric particles with diameters smaller than 100 nm is placed near a magnetic field source and subjected to the effect of the inhomogeneous magnetic field which produces magnetostatic force of the value as follows:

$$F = m_x \, gradB_x + m_y \, gradB_y + m_z \, gradB_z \,,$$

where: $m_x$, $m_y$, $m_z$, constitute component values of the magnetic moment vector of nanometric particles, whereas: $B_x$, $B_y$, $B_z$ are component values of the magnetic flux density vector. Next, under the influence of this force, on the substrate made of a non-magnetic material, nanometric particles are concentrated in the places of the greatest flux density gradients, thus forming islands which grow in an anisotropic way along the lines of the magnetostatic force and thus nanowires are produced. Afterwards, nanowires are fixed in the temperature above 300 °C for 40 minutes.

Example 2

The method of fabricating magnetic nanowires is used in the same way, however with a difference, i.e. a ferromagnetic raw material is sputtered by means of sputtering technique and sputtered nanometric particles are deposited on the substrate in the presence of an inhomogeneous magnetic field. On the substrate surface, in the place of concentration of particles, islands of the sputtered ferromagnetic raw material are created, which additionally increases heterogeneity of the field. As a consequence, islands grow in an anisotropic way compatibly with the field force lines producing fibre structures. Because particles of the sputtered raw material have nanometric dimensions, diameters of the produced fibre structures also have nanometric dimensions. A ferromagnetic raw material, in the form of Fe, Ni, Co or other alloys, is ground to nanoparticles in the device for magnetron sputtering using the sputtering power of 600 W, time - two minutes and argon atmosphere pressure - $8\times10^{-2}$ Tr.

Example 3

The method of fabricating magnetic nanowires is used in the same way as in example 1, however with a difference, i.e. a ferromagnetic raw material is deposited by means of a vacuum evaporation technique and the evaporated nanometric particles are deposited on the substrate in the presence of an inhomogeneous magnetic field.

Example 4

The method of fabricating magnetic nanowires is used in the same way as in example 1, however with a difference, i.e. ferrofluide containing nanometric particles of the ferromagnetic metal is formed on the substrate as nanowires in the presence of an inhomogeneous magnetic field and is fixed in the temperature of 500 °C for 60 minutes.

Example 5

The method of fabricating magnetic nanowires is used in the same way as in example 1, however with a difference, i.e. ferrofluide containing nanometric particles of the ferrite is formed on the substrate as nanowires in the presence of an inhomogeneous magnetic field and is fixed in the temperature of 800 °C for 60 minutes.

Example 6

The method of fabricating magnetic nanowires is used in the same way as in example 1 or 4, however with a difference, i.e. nanometric particles are made of ferrite and the produced nanowires are fixed in the air in the temperature of 600 °C for 1 minute.

The substrate is located between the magnetic field source and ground ferromagnetic raw material. A permanent magnet can be a source of the magnetic field. The substrate made of a non-magnetic material is located possibly close to a source of the magnetic field in a place where the flux density is the greatest and where it is oriented perpendicularly to the substrate. The ground ferromagnetic raw material is deposited on the substrate and its particles are arranged along the lines of the magnetic field forces and they form structures which are oriented perpendicularly to the substrate surface, with a prolonged shape and a diameter smaller than 100 nm.

**Claims**

1. The method of fabricating magnetic nanowires in the presence of a magnetic field is **characterised by** the fact that a ferromagnetic raw material which is ground to nanometric particles is placed near a source of the magnetic field and subjected to the influence of an inhomogeneous magnetic field which produces magnetostatic force of the following value: $F = m_x gradB_x + m_y gradB_y + m_z gradb_z$, where: $m_x$, $m_y$, $m_z$ constitute component values of the magnetic moment vector of nanometric particles, whereas: $B_x$, $B_y$, $B_z$ are component values of the magnetic flux density vector and then under the influence of this force, on the substrate made of a non-magnetic material, nanometric particles are concentrated in the places of the greatest flux density gradients, thus forming islands which grow in an anisotropic way along the lines of the magnetic field force and produce nanowires.

2. The method, in accordance with claim 1, is **characterised by** the fact that a ferromagnetic raw material is sputtered by means of a sputtering technique and sputtered nanometric particles are deposited on the substrate in the presence of an inhomogeneous magnetic field.

3. The method, in accordance with claim 1, is **characterised by** the fact that a ferromagnetic raw material is deposited by means of a vacuum evaporation technique and the evaporated nanometric particles are deposited on the substrate in the presence of an inhomogeneous magnetic field.

4. The method, in accordance with claim 1, is **characterised by** the fact that powder containing nanometric particles is moulded on the substrate in the form of nanowires in the presence of an inhomogeneous magnetic field and it is fixed in the temperature above 300 °C for at least one minute.

5. The method, in accordance with claim 1, is **characterised by** the fact that ferrofluide containing nanometric particles is moulded on the substrate in the form of nanowires in the presence of an inhomogeneous magnetic field and it is fixed in the temperature above 300 °C for at least one minute.

6. The method, in accordance with claim 4 or 5, is **characterised by** the fact that nanometric particles are made of ferrite and the produced nanowires are fixed in the air in the temperature above 500 °C for at least 1 minute.

7. The method, in accordance with claim 1, is **characterised by** the fact that nanometric particles of diameters below 100 nm are applied.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101645341
- WO 2011027184 A
- WO 2011028054 A

**Non-patent literature cited in the description**

- **SHIHUI GE et al.** Approach to fabricating Co nanowire arrays with perpendicular anisotropy: Application of a magnetic field during deposition. *J. Appl. Phys.,* 2001, vol. 90, 509
- **HAO ZHU et al.** Fabrication and magnetic properties of Co67 Ni33 alloy nanowire array. *Scripta Materialia,* 2001, vol. 44 (8-9), 2291-2295